# EUROPEAN PATENT APPLICATION

(11) **EP 2 575 009 A2**
(43) Date of publication of application: **03.04.2013**
(21) Application number: 12186378.1
(22) Date of filing: 27.09.2012
(51) Int. Cl.: G06F 3/023, G06F 3/0488

(54) **User interface method for a portable terminal**

(30) Priority: 29.09.2011 KR 20110098782
(71) Applicant: Samsung Electronics Co., Ltd, Gyeonggi-do 443-742 (KR)
(72) Inventor: Koo, Hyewon, 443-742 Gyeonggi-do (KR); Ku, Hanjun, 443-742 Gyeonggi-do (KR); Kim, Doyeon, 443-742 Gyeonggi-do (KR); Lee, Eunjoo, 443-742 Gyeonggi-do (KR); Lee, Chungkyu, 443-742 Gyeonggi-do (KR)
(74) Representative: Harrison Goddard Foote

(57) **Abstract**

A user interface method for a portable terminal. The method comprises converting a handwriting message inputted via a touch screen into a text message and displaying the text message on the touch screen; displaying a candidate letter list on the touch screen when editing of the converted text message is requested; and correcting the text message using a candidate letter selected from the candidate letter list. A portable terminal arranged to implement the user interface method is also disclosed.

## Description

### BACKGROUND OF THE INVENTION

### 1. Field of the Invention:

The present invention relates to a user interface of a portable terminal. More particularly, the present invention relates to a user interface method for a portable terminal, and a portable terminal implementing the user interface method, in which a handwriting message inputted via a touch screen is converted into a text message, and in which the user can easily edit the converted text message.

### 2. Description of the Related Art:

Recently, with the rapid development of information communication technologies and semiconductor technologies, portable terminals are being widely used. In particular, portable terminals are reaching a mobile convergence phase of providing services, such as multimedia services, previously provided by other terminals, in addition to portable terminal services. As a representative example, a mobile communication terminal, which is a portable terminal, may provide various functions such as a Television (TV) viewing function, a mobile broadcasting reception function, such as receiving digital multimedia broadcasting and digital video broadcasting, a music replay function, such as a Motion Picture Experts Group (MPEG) Audio Layer 3 (MP3) replay function, a video and still camera function, a data communication function, an Internet connection function, a Near Field Communication (NFC) function, and other similar functions, in addition to general communication functions such as a voice call and a message transmission and reception.

Furthermore, as availability and use of portable terminals including a touch screen increases, due to convenience of input via the touch screen, portable terminals may provide a handwriting input function using the touch screen. The handwriting input function stores a message inputted by a user if the user inputs a message via a touch screen using a finger or a stylus. In addition, portable terminals may provide a handwriting message recognition function that converts a stored handwriting message into a text message. However, handwriting message recognition functions are not technologically mature. Hence, when checking a converted text message, in a case where there is an incorrectly recognized letter, the user may need to re-input the handwriting message such that it can be converted again in order for the message to be recognized correctly, or the user may need to correct the converted text message using a letter input device.

Furthermore, a handwriting message recognition function may recognize a handwriting message using only a pre-set system language. In other words, existing handwriting message recognition functions do not provide a function that can re-recognize or reprocess a handwriting message after converting the language from the pre-set system language to another language. Hence, in a case where a handwriting message is written in a language other than the system language and is then incorrectly recognized, the user may need to return to a main screen and change the pre-set system language before the handwriting message can be re-recognized. Therefore, there is a need for a user interface in which a text message may be easily corrected in a text message display screen.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of embodiments of the present invention to address at least the above-mentioned problems and/or disadvantages and to provide at least the advantages described below. Accordingly, it is an aim of embodiments of the present invention to provide a method and apparatus for providing a user interface in a portable terminal capable of easily editing a converted text message after converting a handwriting message into the text message.

In accordance with a first aspect of the present invention there is provided a user interface method for a portable terminal, the method comprising: converting a handwriting message inputted via a touch screen into a text message and displaying the text message on the touch screen; displaying a candidate letter list on the touch screen when editing of the converted text message is requested; and correcting the text message using a candidate letter selected from the candidate letter list.

In accordance with a second aspect of the present invention there is provided a portable terminal for providing a user interface, the portable terminal comprising: a touch screen arranged to receive a handwriting message when a handwriting input mode is activated; and a controller arranged to convert the handwriting message to a text message, to control the touch screen to display a candidate letter list when editing of the converted text message is requested, and to correct the text message using a candidate letter selected from the candidate letter list.

Another aspect of the invention provides a computer program comprising instructions arranged, when executed, to implement a method and/or apparatus in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiment of the present invention will be more apparent from the following description taken in conjunction with the accompanying drawings, in which:

FIG. 1 illustrates a portable terminal according to an exemplary embodiment of the present invention;

FIG. 2 is a flowchart illustrating a user interface method for a portable terminal according to an exemplary embodiment of the present invention;

FIG. 3 is a screen example illustrating a user interface that converts a handwriting message into a text message and displays the converted text message according to an exemplary embodiment of the present invention;

FIG. 4 is a screen example illustrating a user interface for correcting a text message according to an exemplary embodiment of the present invention;

FIG. 5 is a screen example illustrating a user interface for correcting a text message according to an exemplary embodiment of the present invention;

FIG. 6 is a screen example illustrating a user interface for re-recognizing an entire text message by changing a language according to an exemplary embodiment of the present invention;

FIG. 7 is a screen example illustrating a user interface for re-recognizing part of a text message by changing a language according to an exemplary embodiment of the present invention; and

FIG. 8 is a screen example illustrating a user interface for correcting a text message by re-recognizing a handwriting message according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces. In particular, where the indefinite article is used, the specification is to be understood as contemplating plurality as well as singularity, unless the context requires otherwise.

Throughout the description and claims of this specification, the words "comprise" and "contain" and variations of the words, for example "comprising" and "comprises", means "including but not limited to", and is not intended to (and does not) exclude other moieties, additives, components, integers or steps.

Features, integers, characteristics, or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

A portable terminal according to an exemplary embodiment of the present invention is an electronic device having a touch screen, and some examples thereof are a mobile communication terminal, a Personal Digital Assistant (PDA), a smart phone, a tablet personal computer, and a Portable Multimedia Player (PMP), or other similar portable electronic devices.

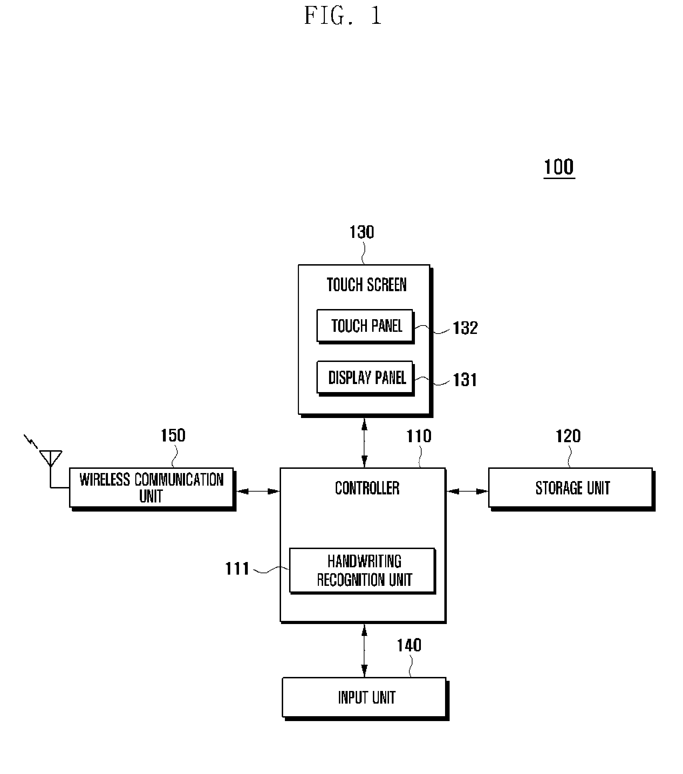

FIG. 1 illustrates a portable terminal according to an exemplary embodiment of the present invention.

Referring to FIG. 1, a portable terminal 100 may include a wireless communication unit 150, an input unit 140, a touch screen 130, a storage unit 120 and a controller 110. The touch screen 130 may include a display panel 131 and a touch panel 132, and the controller 110 can include a handwriting recognition unit 111.

The wireless communication unit 150 forms a communication channel for a call, such as a voice call and a video call, with a base station, and may form a data communication channel for data transmission, and may form other Radio Frequency (RF) channels as well. To this end, although not shown, the wireless communication unit 150 may include a wireless frequency transmission unit that frequency-up-converts and amplifies a transmitted signal, a wireless frequency receiving unit that low-noise-amplifies and frequency-down-converts a received signal, and a transmission and reception separation unit that separates a received signal from a transmitted signal. In particular, the wireless communication unit 150 may transmit a text message, which is generated by converting a handwriting message, to another portable terminal.

The input unit 140 may include input keys and function keys for receiving an input of numbers, letters, or various characters and information, setting various functions and controlling the function of the portable terminal 100. In particular, the input unit 140 may receive an input signal that requests a handwriting mode execution, a signal that requests a text conversion of a handwriting message, a signal corresponding to editing of the text message, and other similar signals, and supply the signal to the controller 110. The input unit 140 may be a singular or a combination of input units, apparatuses or input devices, such as a button-type key pad, a ball joystick, an optical joystick, a wheel key, a touch key, a touch pad, a touch screen 130, and other suitable input devices.

The touch screen 130 may perform an input function and an output function. To this end, the touch screen 130 may include a display panel 131 that performs an output function and a touch panel 132 that performs an input function.

The touch panel 132 is mounted on a front side of the display panel 131, and may generate a touch event according to a contact of a touch input device, e.g., a user's finger or stylus, or other similar touch input devices, and transmits the generated touch event to the controller 110. The touch panel 132 may recognize a touch through a change of a physical quantity, such as capacitance and resistance, according to a contact of the touch input unit, and may transmit touch types (such as a tap, a drag, a flick, a double-touch, a long-touch and a multi-touch, or other similar touch types) and touched position information to the controller 110. The touch panel 132 may be any suitable touch panel type, and is known to those skilled in the art, and thus a detailed description thereof will be omitted herein for brevity.

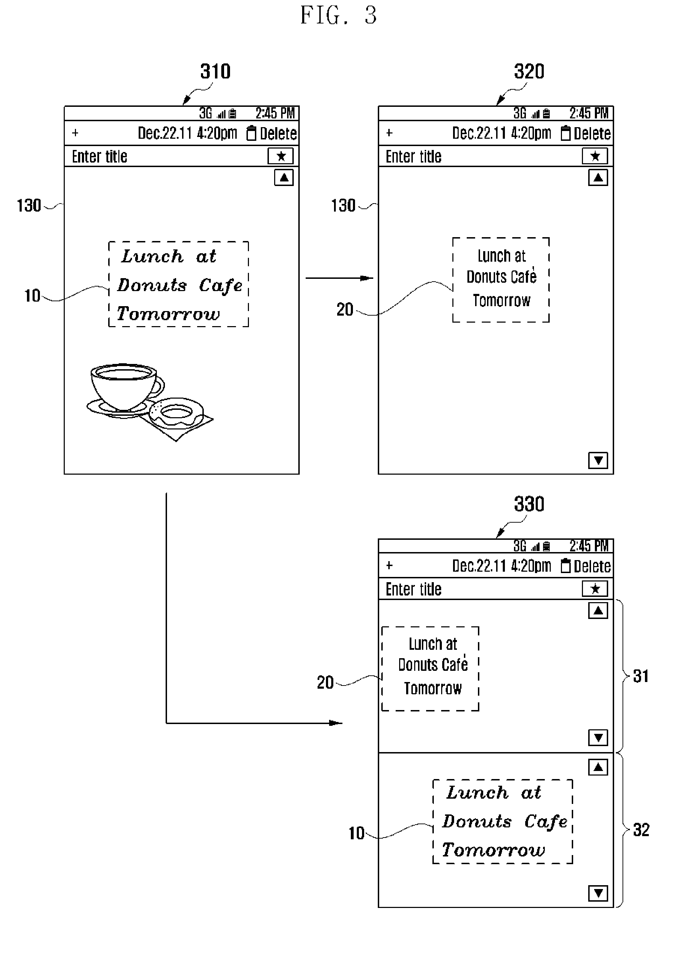

The display panel 131 displays information inputted by a user or information provided to a user, as well as various menus and other information that is displayable. That is, the display panel 131 may provide various screens according to the use of the portable terminal 100, such as a standby screen, a home screen, a menu screen, a message writing screen, a call screen, a schedule writing screen, and an address screen, or any other similar screen. In particular, the display panel 131 may output a screen for inputting a handwriting message, a screen for displaying the text message, a screen for correcting the text message, a language list screen for selecting a language for re-recognizing the text message or the handwriting message. The details thereof will be explained later with reference to FIGs. 3 to 8. The display panel 131 may be formed as a Liquid Crystal Display (LCD), an Organic Light Emitted Diode (OLED), an Active Matrix Organic Light Emitted Diode (AMOLED), or any other suitable display panel type.

The storage unit 120 may store user data, data transmitted and received during communication, as well as an operating system of the portable terminal 100 and an application program for other optional functions, such as a sound replay function, an image or video replay function, and a broadcast replay function, or other similar optional functions. For example, the storage unit 120 may store a key map or a menu map for operation of a touch screen 130. Here, the key map and the menu map may be constituted in various forms, respectively. For example, the key map can be a keyboard map, a 3*4 key map and a QWERTY key map, etc., or may be a control key map for controlling operation of a currently activated application program. Furthermore, the menu map may be a menu map for controlling operation of a currently activated application program. The storage unit 120 may store a text message, a game file, a music file, a movie file and a contact number, or other similar information. In particular, the storage unit 120 may include a handwriting recognition routine that converts a handwriting message inputted by a user on the touch screen 130 into a text message, a candidate letter providing a routine that provides a candidate letter when correction of a converted text message is requested, and a text message correction routine that substitutes at least part of the converted text message to a candidate letter, adds the candidate letter, or performs other similar functions with the candidate letter.

The handwriting recognition routine may analyse a handwriting message, compare the message with pre-stored letters, and recognize that the most similar letter has been inputted. At this time, non-selected similar letters may be provided as candidate letters when a correction is requested. For example, as a result of analysing the handwriting message, in the state where a word "Good" has been considered most similar to the handwriting letters, from among words such as "Good" and "Mood", then the word "Good" is displayed in the text message display screen. If correction of the word "Good" is requested, then the candidate letter providing routine may provide the word "Mood" as a candidate word. Furthermore, in a case where correction of the converted text message "Good" is requested, the candidate letter providing routine may provide candidate words that are expected based on the recognized text, such as "good", "Goods", "goodness", "goodwill", and other similar words. To this end, the storage unit 120 may store a dictionary for extracting expected candidate letters provided when correction of a text message is requested. The storage unit 120 may store any number of dictionaries for various languages and subjects.

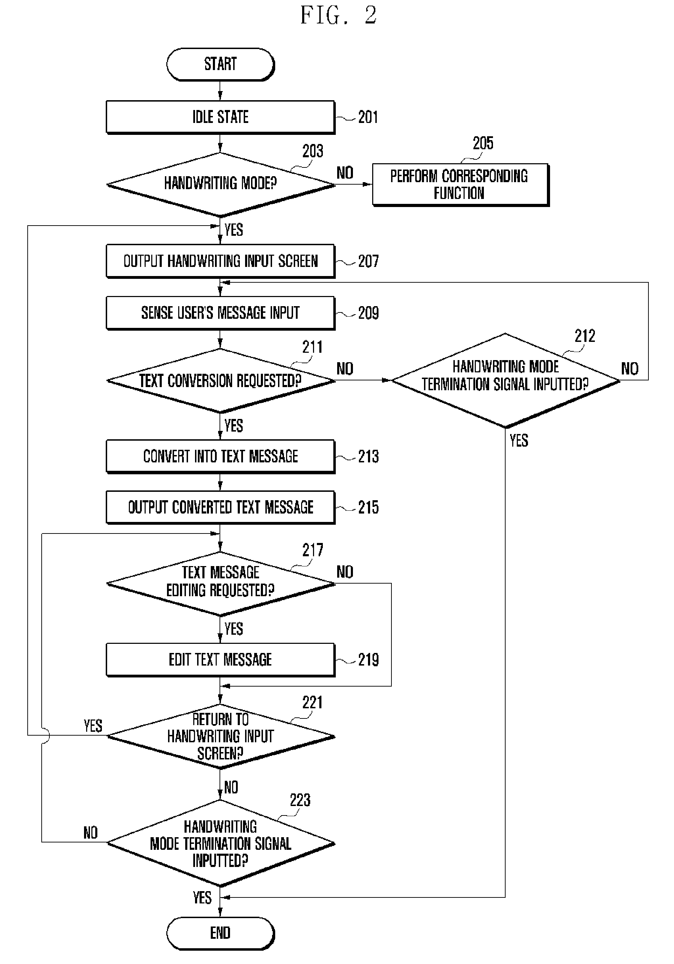

The controller 110 may control overall operation of the portable terminal 100 and a signal flow between internal blocks, units or elements of the portable terminal 100, and a data processing function that processes data. In particular, the controller 110 may control a process of converting a handwriting message inputted by a user into a text message through a touch screen 130, and edit, correct and re-recognize the converted text message. To this end, the controller 110 may include a handwriting recognition unit 111. The handwriting recognition unit 111 may analyse a handwriting message, compare the message with pre-stored letters, and recognize that a most similar letter has been inputted. Further description and details of the controller 110 will be explained later with reference to FIGs. 2 to 5.

Furthermore, though not illustrated in FIG. 1, the portable terminal 100 may optionally include components having additional functions, such as a camera module for photographing an image or a video, a Near Field Communication (NFC) module for Near Field Communication, a broadcast receiving module for receiving a broadcast, a digital sound source replay module like a Motion Picture Experts Group (MPEG) Audio Layer 3 (MP3) module, an Internet communication module that performs an Internet function, or other similar optional functions and modules. Since such components may be modified in various ways according to a convergence trend of digital devices, not all such components can be listed here, but the portable terminal 100 according to the present exemplary embodiments may further include components of the same level as that of the above mentioned components or other suitable components that may be included in the portable terminal 100.

FIG. 2 is a flowchart illustrating a method of providing a user interface of a portable terminal according to an exemplary embodiment of the present invention.

Referring to FIGs. 1 and 2, a controller 110 may be at idle state at step 201. Next, the controller 110 may determine whether a handwriting mode is activated at step 203. Here, the handwriting mode is an input mode in which a user may directly input a message, for example, in a manner as if the user writes a note using a touch input device, such as a stylus, on the touch screen 130. The handwriting mode may be activated in all situations where letters may be inputted, such as in writing a memo and a text message, or other similar situations.

If the handwriting mode is not activated, the controller 110 may perform a corresponding function at step 205. For example, the controller 110 may perform a music replay function, a video replay function, an Internet connection function, or other similar functions, or maintain the idle state according to the user's request. On the other hand, if the handwriting mode is activated, the controller 110 may output the handwriting input screen at step 207, and may sense the user's message, hereinafter referred to as a "handwriting message", that is input at step 209. If the handwriting message input is sensed, then the controller 110 may store the handwriting message by storing touch location data changed according to the movement of the touch input device. The details of the handwriting input screen will be explained later with reference to FIG. 3.

Next, the controller 110 may determine whether a text conversion of the handwriting message is requested at step 211. If the text conversion is not requested at step 211, then the controller 110 may determine whether a handwriting mode termination signal is inputted at step 212. If the handwriting mode termination signal is inputted, then the controller 110 may terminate the handwriting mode. On the other hand, if the handwriting mode is not terminated, the controller 110 may return to step 209.

Furthermore, in a case where a text conversion is requested at step 211, the controller 110 may convert the handwriting message into a text message at step 213. To this end, the controller 110 may include the handwriting recognition unit 111. If the conversion of the handwriting message is completed, then the controller 110 may control the touch screen 130 to output a text message screen indicating the text message at step 215. The details of the text message screen will be explained later with reference to FIG. 3.

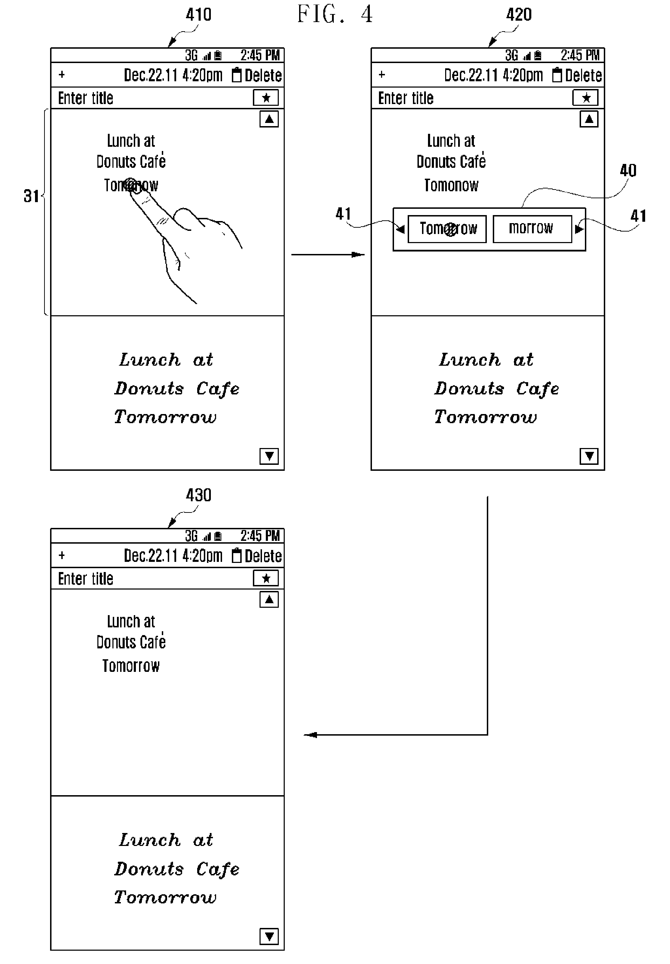

Next, the controller 110 may determine whether the editing of a text message is requested at step 217. If the editing is not requested, then the controller 110 may move to step 221. On the other hand, if the editing is requested, the controller 110 may provide editing of the text message according to the editing request at step 219. That is, the controller 110 may correct the text message or re-recognize at least part of the text message in another language. The details of such a method of editing the text message will be explained later with reference to FIGs. 4 to 8.

Next, the controller 110 may determine whether a return to the handwriting input screen has been requested at step 221. The return request may be inputted through a pre-set key, such as a cancel key, a user input or a menu. In the case where the return to the handwriting input screen is requested, then the controller 110 may return to step 207 and perform the above explained process. On the other hand, in a case where the return to the handwriting input screen is not requested, the controller 110 may determine whether a handwriting mode termination signal is inputted at step 223. If the handwriting mode termination signal is not inputted, then the controller 110 may return to step 217. On the other hand, if the handwriting mode termination signal is inputted, the controller 110 may terminate the handwriting mode.

Furthermore, though not illustrated in FIG. 2, in a case where the handwriting mode is executed in the memo mode, the controller 110 may store a text message as a memo. Furthermore, in a case where the handwriting mode is executed in the letter message writing mode, the controller 110 may transmit the text message to another portable terminal.

FIG. 3 is a screen example illustrating an interface that converts a handwriting message into a text message and displays the converted text message according to an exemplary embodiment of the present invention.

Referring to FIGs. 1 to 3, if the handwriting mode is activated, then the touch screen 130 may display the handwriting input screen. The handwriting input screen is scrollable. If the handwriting input screen is displayed, then a user may input a message, such as a handwriting message 10, as illustrated in a screen example 310, by using a stylus, a finger, or any other suitable input means or device.

After the handwriting message is inputted, if the user executes a conversion menu, then the touch screen 130 may convert the handwriting message into text of a text message 20 and display the text message 20. For example, the touch screen 130 may output a first text message display screen including only a text message 20 as illustrated in the screen example 320 under the control of the controller 110. The first text message screen is scrollable. Furthermore, the touch screen 130 may display a second text message display screen which is divided into a text area 31 for displaying the text message 20 and a handwriting area 32 that displays a handwriting message 10, as illustrated in a screen example 330, under the control of the controller 110. The text area 31 and the handwriting area 32 are scrollable.

FIG. 4 is a screen example illustrating an interface for correcting a text message according to an exemplary embodiment of the present invention.

Referring to FIGs. 1 to 4, as illustrated in a screen example 410, a user may touch a text area 31 in order to correct a text message. If a touch is sensed in the text area 31, the controller 110 may control a touch screen 130 to pop up a candidate letter list window 40 including candidate letters positioned adjacent to touched points, as illustrated in a screen example 420. At this time, the controller 110 may extract a word positioned at the touched point, and may generate at least one candidate letter based on the extracted word. The candidate letter may be a letter that is not selected from among similar letters recognized at the time when the converting the handwriting message occurred. Furthermore, the candidate letter may be an expected word based on the extracted word. The candidate letter list could therefore be referred to as a candidate word list in certain embodiments of the invention.

The candidate letter list window 40 is scrollable. For example, the user may scroll a candidate letter list in a certain direction by touching a scroll menu 41 positioned at both ends of the candidate letter list window 40. However, the present invention is not limited thereto, and any suitable manner of displaying the scroll menu 41 may be used. For example, user may scroll a candidate letter list through a touch movement, such as a drag and a flick, within the candidate letter list window 40.

If a certain candidate letter is selected from the candidate letter list window 40, then the controller 110 may change a message "Tomonow" positioned at the touched point, as illustrated in the screen example 410, to a selected candidate letter "Tomorrow", as illustrated in a screen example 430. However, the present invention is not limited thereto, and the candidate letter list may be output in the form of a pop-up window when a text message is touched, and incorrectly recognized part of the text message may be easily corrected by selecting one candidate from the candidate letter list, or any other suitable manner of displaying or outputting the candidate letter list may be used.

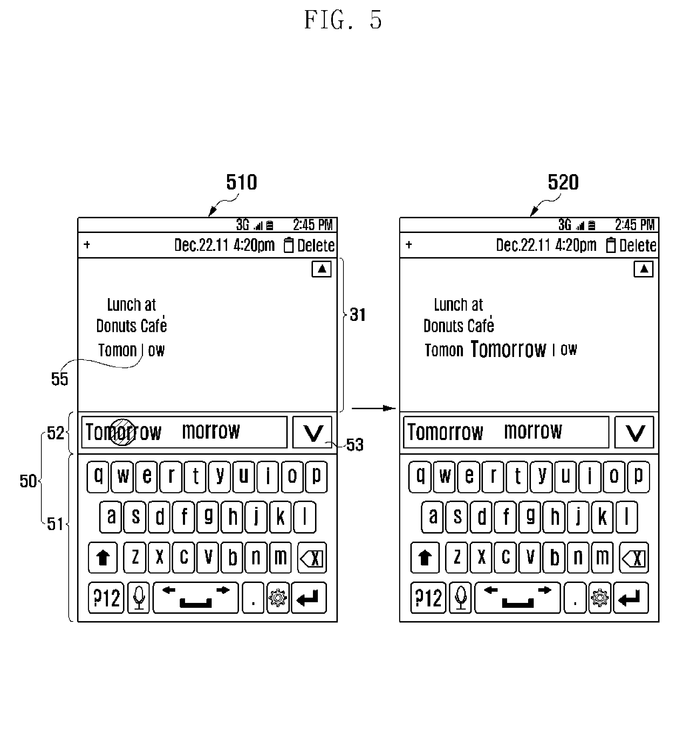

FIG. 5 is a screen example illustrating an interface for correcting a text message according to a second exemplary embodiment of the present invention.

Referring to FIGs. 1 to 5, if a touch is sensed in the text area 31, then the controller 110 may display a cursor 55 at a touched point and output a virtual keypad 50 for inputting letters, as illustrated in a screen example 510. The virtual keypad 50 may include a general key area 51 and a candidate letter display area 52.

In the state shown in the screen example 510, the user may select one of the letters included in the candidate letter display area 52. At this time, the controller 110 may additionally input a selected candidate letter in the area where the cursor 55 is located, as illustrated in the screen example 520. Furthermore, in the state illustrated in the screen example 510, in a case where there is no desired candidate letter in the candidate letter display area 52, the user may make more candidate letters outputted by extending the candidate letter display area 52 by touching an extension menu 53. Additionally, the user may correct the text message through the key area 51.

As discussed with reference to FIG. 5, the selected candidate letter is added at the position of the cursor 55. However, the present invention is not limited to this. For example, in a case where a candidate letter is selected in the candidate letter display area 52, it is possible to change a message "Tomonow" positioned at the touched point to "Tomorrow" in a manner as discussed with reference to FIG. 4.

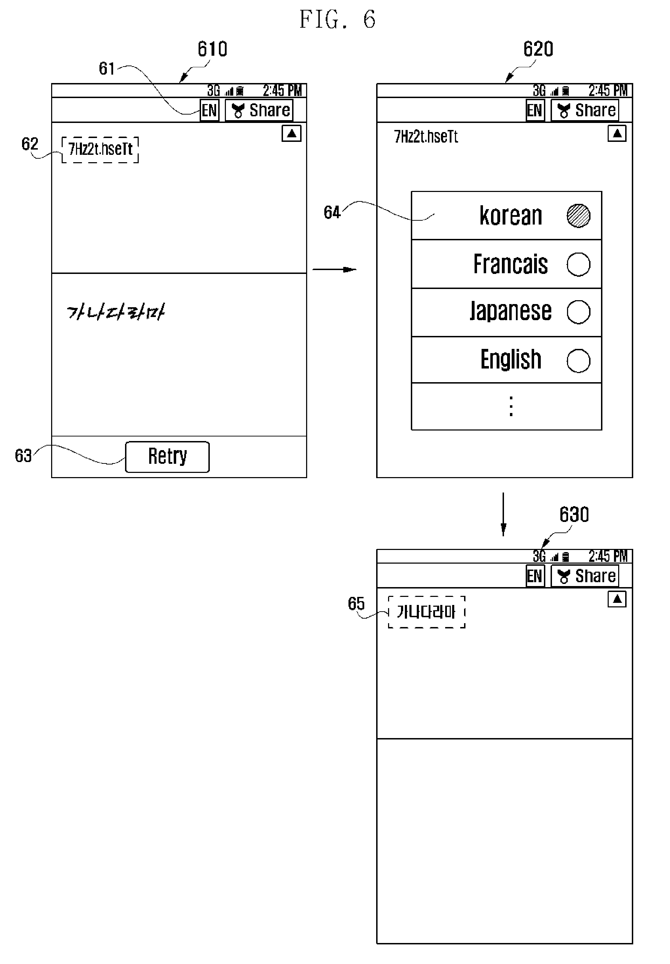

FIG. 6 is a screen example illustrating an interface for re-recognizing an entire text message by changing a language according to an exemplary embodiment of the present invention.

Referring to FIGs. 1 to 6, as illustrated in a screen example 610, in a state where a system language is set to a first language, in a case where a handwriting message written in a second language is converted, the handwriting recognition unit 111 of the controller 110 may not appropriately or correctly recognize the handwriting message. That is, the handwriting message recognition unit 111 of the controller 110 may incorrectly recognize and display an incorrectly recognized message 62. Here, language indicator 61 of the screen example 610 indicates that the system language is set to English.

In such a state, in a case where the whole of the handwriting message is to be recognized, the user may input a pre-set menu key (not shown). If the pre-set menu key is inputted, then the controller 110 may output a re-recognition menu 63 at the bottom of the touch screen 130. If the re-recognition menu 63 is activated (e.g., touched), then the controller 110 may output a language list window 64 which can select a language to be used when re-recognizing a handwriting message, as illustrated in the screen example 620. If a language is selected from the language list window 64, then the controller 110 may re-recognize the incorrectly recognized message 62 in the selected language, and may change the incorrectly recognized message 62 to a re-recognized message 65 and may display the changed message. For example, in a case where a user selects Korean from the language list window 64, then the controller 110 may change the incorrectly recognized message 62 in English to a re-recognized message 65 in the selected language of Korean. Likewise, in a case where the handwriting message is written in a language other than the system language and is then incorrectly recognized, the present exemplary embodiment allows for the portable terminal 100 to easily re-recognize the incorrectly recognized message in another language without changing the system language. As such, the present invention may improve a user's convenience.

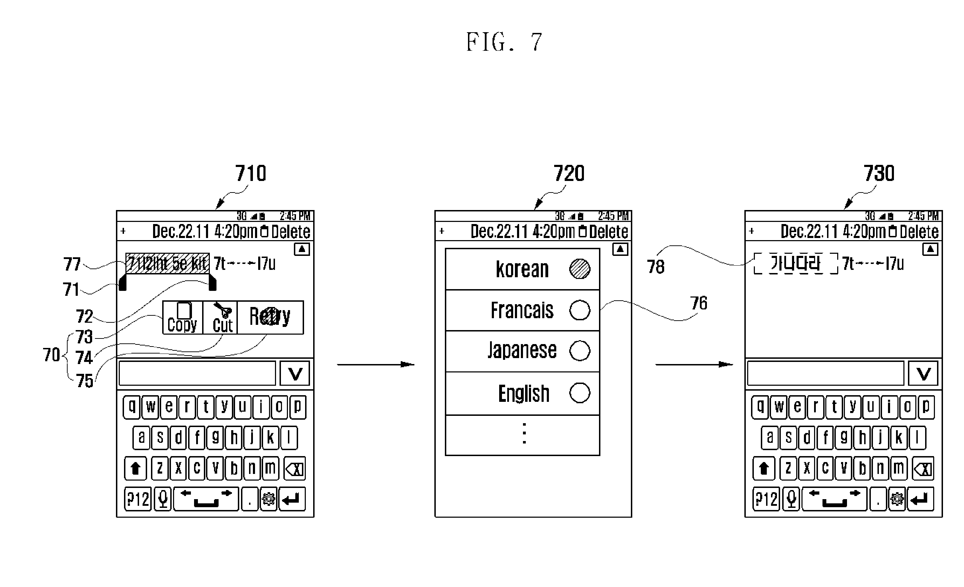

FIG. 7 is a screen example illustrating an interface for re-recognizing part of a text message by changing the language according to an exemplary embodiment of the present invention.

Referring to FIGs. 1 to 7, in a state where an incorrectly recognized text message is outputted, the user may select an area desired to be re-recognized in the text message, hereinafter called a "re-recognition area", as illustrated in a screen example 710. At this time, the re-recognition area may be selected through various methods. For example, if the user touches a text message, then the controller 110 may display a start mark 71 and a termination mark 72, and the user may set a re-recognition area by moving or adjusting respective positions of the start mark 71 and the termination mark 72. Furthermore, the user may set a re-recognition area by dragging a partial area of the text message using a touch input device like a stylus. Furthermore, when a pre-set touch event, such as a double touch or a long touch, is inputted, then the controller 110 may set a word positioned at the point where the touch event has occurred to be the re-recognition area.

If the setting of the re-cognition area is completed, then the controller 110 may output a menu window 70, as illustrated in the screen example 710. For example, the menu window 70 may include a copy menu option 73 that copies a message of the selected area, a cut menu option 74 that cuts a message of the selected area, and a re-recognition menu option 75. However, the present exemplary embodiments are not limited thereto, and the menu included in the menu window 70 may include only a re-recognition menu option 75 or may further include an additional menu option. Furthermore, the menu window 70 may be outputted when a pre-set signal is inputted after the setting of the re-recognition area is completed. For example, after the re-recognition area is set using a start mark 71 and a termination mark 72, in a case where a long touch signal of the start mark 71 or the termination mark 72 is inputted, the controller 110 may output a menu window 70.

If a re-recognition button 75 is touched in the menu window 70, then the controller 110 may output a language list window 76 for selecting a language for re-recognizing a message included in the re-recognition area, as illustrated in a screen example 720. If a certain language is selected from the language list window 76, then the controller 110 may re-recognize a message included in the re-recognition area as the selected language, change the message included in the re-recognition area to a re-recognized message, and then output the changed message. For example, the controller 110 may change an incorrectly recognized message 77 to a corrected message 78 that is re-recognized in Korean, as illustrated in a screen example 730. Likewise, according to the present exemplary embodiments, the portable terminal 100 may select and re-recognize part of the text message. Hence, according to the present exemplary embodiments, in a case where only a portion of the text message is incorrectly recognized as a handwriting message mixed with multiple languages that is converted, only the incorrectly recognized portion may be re-recognized, thereby improving a user's convenience.

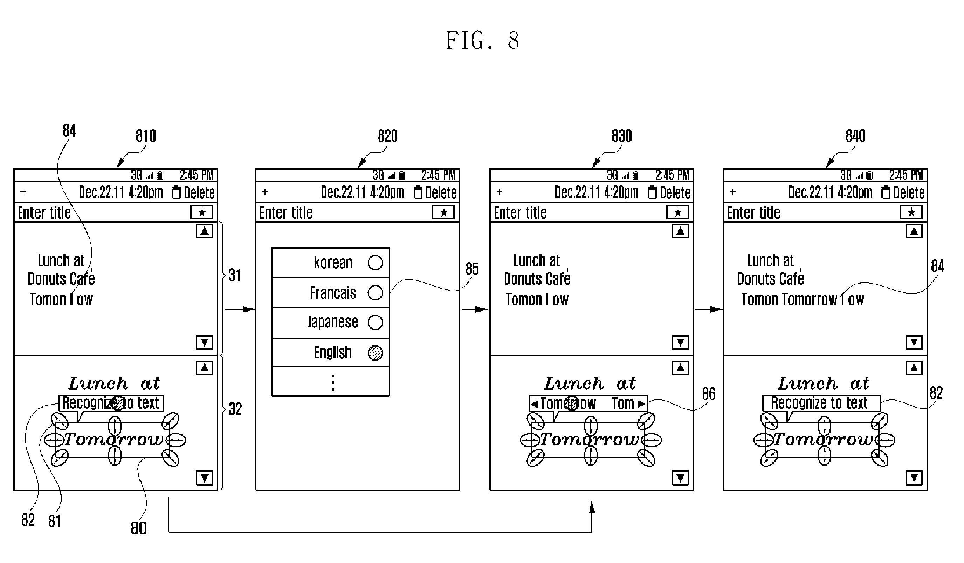

FIG. 8 is a screen example illustrating an interface for correcting a text message by re-recognizing a handwriting message according to an exemplary embodiment of the present invention.

Referring to FIGs. 1 to 8, a text message may be corrected through the handwriting area 32. For example, if user touches the text area 31, the controller 110 may display a cursor 84 at a touched point of the text area 31, and output a conversion menu window 82 including an area setting window 80 and a conversion menu that requests conversion of a handwriting message included in the area setting window 80 in the handwriting area as illustrated in the screen example 810. The area setting window 80 is a rectangle form, or in other words, has a rectangular shape, and includes a plurality of size change marks 81. The area setting window 80 may include 8 size change marks so that the size may be increased or decreased in an upward, a downward, a right, a left and diagonal directions. For example, after the user touches one of the size change marks 81, in a case where the user moves the touch, the controller 110 may increase or decrease a size of the upper side and a size of the left side of the area setting window 80 at the same time. Furthermore, the user may move a position of the area setting window 80 by moving an area where one of the size change marks 81 of the area setting window 80 is not indicated while touching the area. The user may set an area to be re-recognized during a handwriting message through a position movement and a size change method of the above-described area setting window 80.

After completing the setting of the area to be re-recognized through the area setting window 80, if the user touches the change menu window 82, the controller 110 may output the language list window 85, as illustrated in a screen example 820. If any one of the languages is selected from the language list window 85, the controller 110 may re-recognize the handwriting message of the selected area in the selected language, and may then output at least one re-recognized candidate letter in the candidate letter list window 82, as illustrated in a screen example 830. At this time, the controller 110 may change the conversion menu window 82 to the candidate letter list window 86, and output the candidate letter list. The candidate letter list window 86 is scrollable. If at least one the candidate letters outputted in the candidate letter list window 86 is selected, then the controller 110 may additionally input the selected candidate letter at a point where the cursor 84 of the text area 31 is positioned, as illustrated in a screen example 840. If the candidate letter is additionally inputted, then the controller 110 may change the candidate letter list window 86 to a conversion menu window 82.

Furthermore, in the state shown in the screen example 810, when the conversion menu window 82 is touched, the controller 110 omits a step of outputting the language list window 85, and proceeds with moving to the state shown in the screen example 830. In such a case, the controller 110 may re-recognize a handwriting message of the selected area in a pre-set system language through the area setting window 80, and output the candidate letter in the candidate letter list window 86.

Furthermore, as discussed above, a re-recognized text message is added at the touched point, such as the position of the cursor 84, but the present exemplary embodiments are not limited thereto. For example, as illustrated in FIG. 7, in the state where a portion of text to be corrected is set as a block in the text message area 32, in a case where part of the handwriting message is re-recognized using the area setting window 80, then the controller 110 may change the text message, which is set as a block, to the re-recognized text message.

It will be appreciated that embodiments of the present invention can be realized in the form of hardware, software or a combination of hardware and software. The foregoing method for providing a user interface of a portable terminal according to the exemplary embodiments of the present invention may be implemented in an executable program command form by various computer means and may be recorded in a non-transitory computer readable recording medium. In this case, the computer readable recording medium may include a program command, a data file, and a data structure individually or a combination thereof. In the meantime, the program command recorded in the non-transitory recording medium may be specially designed or configured for the present exemplary embodiments or be known to a person having ordinary skill in a computer software field to be used. The non-transitory computer readable recording medium includes magnetic media, such as a hard disk, a floppy disk, a magnetic tape, or other similar magnetic medias, Optical Media such as Compact Disc Read Only Memory (CD-ROM) or Digital Versatile Disc (DVD), Magneto-Optical Media such as an optical disk, and a hardware device such as a Read Only Memory (ROM), a Random Access Memory (RAM), a flash memory storing and executing program commands, or any other suitable non-transitory computer readable recording medium.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Furthermore, the program command may include a machine language code created by a complier and a high-level language code executable by a computer using an interpreter. The foregoing hardware device may be configured to be operated as at least one software module to perform operations of the present exemplary embodiments.

As considered above, according to a method and apparatus for providing a user interface of a portable terminal according to exemplary embodiments of the present invention, a handwriting message is converted into a text message, and the converted text message may be easily edited. That is, at least part of the converted text message may be easily corrected, and at least part of a text message that is converted into a certain language may be easily re-recognized in another language, thus, improving user convenience.

While the invention has been shown described with reference to certain exemplary embodiments thereof, it will be understood by those skilled that various changes in form and details may be made therein without departing from the scope of the invention as defined by the appended claims and their equivalents.

## Claims

1. A user interface method for a portable terminal, the method comprising:
converting a handwriting message inputted via a touch screen into a text message and displaying the text message on the touch screen;
displaying a candidate letter list on the touch screen when editing of the converted text message is requested; and
correcting the text message using a candidate letter selected from the candidate letter list.

2. The method of claim 1, wherein converting a handwriting message into a text message and the displaying the text message comprises:
displaying the text message in a display area comprising the entire of the touch screen or displaying the handwriting message and the text message in different areas of the touch screen by dividing the touch screen.

3. The method of claim 1 or claim 2, wherein displaying a candidate letter list comprises:
sensing a touch event generated on the text message;
extracting a word positioned at a location of the sensed touch event; and
displaying a pop-up window on the touch screen including at least one candidate letter, which is generated based on the extracted word, at a position adjacent to the location of the sensed touch event, or a virtual keypad including at least one candidate letter generated based on the extracted word.

4. The method of claim 3, wherein correcting the text message comprises:
performing at least one of changing the extracted word to the selected candidate letter, and adding the selected candidate letter at the location where the touch event has occurred.

5. The method of any one of claims 1 to 4, further comprising:
requesting re-recognition of the text message;
displaying on the touch screen a language list window for selecting a language in which the text message is to be re-recognized;
selecting a language from the language list window; and
re-recognizing the text message in the selected language.

6. The method of any one of claims 1 to 4, further comprising:
selecting a part of the text message;
requesting re-recognition of the selected part of the text message;
displaying on the touch screen a language list window for selecting a language to re-recognize the selected part of the text message;
selecting a language from the language list window; and
re-recognizing the selected part of the text message in the selected language.

7. The method of any one of claims 1 to 4, further comprising:
displaying an area setting window for setting at least part of the handwriting message when a re-recognition of the handwriting message is requested;
displaying on the touch screen a conversion menu window including a conversion menu that requests the re-recognition of the handwriting message;
selecting at least a partial area of the handwriting message using the area setting window;
displaying on the touch screen a language list window for selecting a language to be used at the time of the re-recognition being selected;
selecting a language from the language list window; and
re-recognizing at least the partial area of the selected handwriting message in the selected language.

8. The method of claim 7, wherein the area setting window includes a plurality of size change marks for changing at least one of a horizontal size and a vertical size of the area setting window.

9. A portable terminal for providing a user interface, the portable terminal comprising:
a touch screen arranged to receive a handwriting message when a handwriting input mode is activated; and
a controller arranged to convert the handwriting message to a text message, to control the touch screen to display a candidate letter list when editing of the converted text message is requested, and to correct the text message using a candidate letter selected from the candidate letter list.

10. The portable terminal of claim 9, wherein the touch screen is arranged to display the text message in an display area comprising the entire of the touch screen when displaying the text message, or to display the handwriting message and the text message in different areas of the touch screen after dividing the touch screen into two areas.

11. The portable terminal of claim 9 or claim 10, wherein the controller is arranged to extract a word positioned at a location of a touch event that has occurred when the touch event occurs on the text message;
wherein the controller is arranged to generate at least one candidate letter based on the extracted word; and
wherein the controller is arranged to display a candidate letter list window including the generated at least one candidate letter at a position adjacent to the location of the touch event, or to output a virtual keypad including the generated at least candidate letter.

12. The portable terminal of claim 11, wherein the controller is arranged to change the extracted word to a candidate word selected from among the one or more candidate words, or to correct the text message by adding the selected candidate word at the location of the touch event.

13. The portable terminal of any one of claims 9 to 12, wherein the controller is arranged to display a language list window for selecting a language in which the text message is to be re-recognized when the re-recognition of the text message is requested; and
wherein the controller is arranged to re-recognize the text message in a language selected from the language list window.

14. The portable terminal of any one of claims 9 to 12, wherein the controller is arranged to display an area setting window for setting at least a partial area of the handwriting message as a block when the re-recognition of the handwriting message is requested;
wherein the controller is arranged to display a conversion menu window including a conversion menu that requests the re-recognition of the handwriting message;
wherein the controller is arranged to display a language list window for selecting a language to be used when the conversion menu is activated; and
wherein the controller is arranged to re-recognize the set at least partial area of the selected handwriting message through the area setting window in a language selected from the language list window.

15. The portable terminal of claim 14, wherein the area setting window includes a plurality of size change marks for changing at least one of a horizontal size and a vertical size of the area setting window.
